**Europäisches Patentamt**

**European Patent Office**

**Office européen des brevets**

(19)

(11) Veröffentlichungsnummer : **0 481 115 B1**

(12)

# EUROPÄISCHE PATENTSCHRIFT

(45) Veröffentlichungstag der Patentschrift :
05.01.94 Patentblatt 94/01

(51) Int. Cl.⁵ : **C09J 5/02**, B24C 11/00

(21) Anmeldenummer : **90119977.8**

(22) Anmeldetag : **18.10.90**

(54) **Verfahren zur Verbesserung der Haftung von Kunststoffen auf Metallen.**

(43) Veröffentlichungstag der Anmeldung :
**22.04.92 Patentblatt 92/17**

(45) Bekanntmachung des Hinweises auf die
Patenterteilung :
**05.01.94 Patentblatt 94/01**

(84) Benannte Vertragsstaaten :
**AT BE CH DE DK ES FR GB GR IT LI LU NL SE**

(56) Entgegenhaltungen :
**EP-A- 0 326 097**

(73) Patentinhaber : **Vita Zahnfabrik H. Rauter
GmbH & Co KG
Spitalgasse 3
D-79713 Bad Säckingen (DE)**

(72) Erfinder : **Müller, Wolf-Dieter, Dr.
Dankmarsteig 69
O-1185 Berlin (DE)**
Erfinder : **Fleischfresser, Carsten
Simon-Dach-Strasse 8
O-1040 Berlin (DE)**
Erfinder : **Kersten, Jörg
Berliner Strasse 4
O-1409 Mühlenberg (DE)**
Erfinder : **Lange, Norbert
Dorfstrasse 61
O-1273 Petershagen (DE)**
Erfinder : **Lotz, Jens
Gadebuscher Strasse 10
O-1144 Berlin (DE)**
Erfinder : **Ludeck, Wolfgang
Kaskelstrasse 19
O-1136 Berlin (DE)**

(74) Vertreter : **Werner, Hans-Karsten, Dr. et al
Patentanwälte von Kreisler-Selting-Werner
Postfach 10 22 41
D-50462 Köln (DE)**

**Beschreibung**

Die Erfindung findet überall dort Anwendung, wo Metall-Kunststoff-Verbundsysteme hergestellt werden und eine hohe Verbundfestigkeit erforderlich ist. Ein wichtiges Anwendungsgebiet ist unter anderem in der Stomatologie die Verblendung von Brücken, Kronen und Prothesen.

Ein Gütesiegel des Metall-Kunststoff-Verbundes ist dessen Verbundfestigkeit. Er muß dauerhaft Belastungen und wechselnden Temperaturbeanspruchungen standhalten. Eine wesentliche Voraussetzung für einen optimalen Verbund ist die höchstmögliche Nutzung der auf der Metalloberfläche vorhandenen retentiven Stellen. Die Nutzung letzterer ist wesentlich von der Vorbehandlung der Metalloberfläche abhängig. So ist aus der DE-OS 32 11 123 der Einsatz von Silanlösungen zur Verbesserung des Metall-Plast-Verbundes bekannt. Der metallische Grundkörper wird ein- oder mehrmals in eine Silanlösung getaucht und dann getrocknet. Auf der erhaltenen Silanschicht werden gleichmäßig dünn eine Kunststoffschicht aufgetragen und anschließend nach bekannten Verfahren Verblendschalen aufgebracht. Vor der Silanisierung erfolgte eine Reinigung durch Sandstrahlen mit Korund. Nachteil dieser Arbeitsweise ist die Begrenzung auf Si-haltige Nichtedelmetallegierungen. Die zur Anwendung gekommenen Silane sind sehr teuer, da sie nach aufwendigen Spezialverfahren hergestellt werden müssen. Außerdem ist die erhaltene Silanschicht nicht stabil und erfordert eine sofortige Weiterverarbeitung.

Im U.S.-Patent 4,364,731 wird eine Haftvermittlerschicht aus anorganischen Oxiden, darunter auch $SiO_2$, beschrieben. Die Oxidschichten werden silanisiert und ein Verblendmaterial nach bekannten Verfahren aufgebracht. Die anorganische Schicht wird aufgesputtert. Dieses Verfahren verlangt eine präzise Vorgehensweise zur Herstellung einer unbeschädigten Mantelschicht. Weiter in der Patentschrift beschriebene Verfahren sind die Beschichtung aus der Dampfphase unter chemischer Zersetzung (CVD) und die Plattierung mit Hilfe reaktiver Ionen.

In der DE-PS 34 03 894 wird in Abwandlung der US-PS die $SiO_2$-Schicht mit Hilfe der Flammenpyrolyse unter Verwendung einer in der Flamme oxidierbaren Si-Verbindung erhalten. Die Flammenpyrolyse erfordert nicht nur teure Geräte, sondern auch hochqualifiziertes und hochspezialisiertes Bedienungspersonal, denn die gewünschten Silanverbindungen werden nur bei korrekter Einhaltung der Reaktionsbedingungen erzielt.

In der DE-PS 36 42 290 wird ein Verfahren beschrieben, das eine $SiO_2$-Schicht durch Auftragen eines Kieselsoles oder einer Dispersion einer feinverteilten Kieselsäure auf die Metalloberfläche und Einbrennen bei einer Temperatur von 100-800°C erzeugt.

Die beschriebenen Verfahren sind entweder nur für bestimmte in der Stomatologie gebräuchliche Werkstoffkombinationen zu verwenden, oder sie benötigen einen hohen, einem zahntechnischen Laboratorium nicht zumutbaren Aufwand. Außerdem ist eine gesonderte Schulung zur Beherrschung der Anlagen notwendig.

In der DE-OS 38 02 042 sowie der DE-PS 38 02 043 wird ein Verfahren zur Vorbereitung einer Metalloberfläche für die Verbindung mit Kunststoff durch Aufbringen einer siliciumhaltigen Schicht und Verwendung von siliciumhaltigem Material beschrieben. Die hierin beschriebenen Verfahrensvarianten haben den Nachteil, daß sehr kleines Strahlgut (< 1 µm) mit einem Anteil bis zu 50 Gew.-% eingesetzt wird. Dies bedarf zusätzlicher technischer Aufwendungen zur Beseitigung des beim Abstrahlen anfallenden Staubes. Schlägt dieser sich auf der abgestrahlten Oberfläche nieder, so ist eine effektive Verbundfestigkeitssteigerung nicht mehr zu erzielen, da der Staub eine sehr hohe Adhäsivität auf der Oberfläche besitzt und durch eine anschließende Reinigung der abgestrahlten und konditionierten Oberfläche der gewollte Effekt zerstört wird.

Die Aufgabe der Erfindung besteht darin, ein einfaches Verfahren zur Konditionierung der Metalloberfläche zu entwickeln, das eine zuverlässige Aktivierung der Metalloberfläche im Sinne der $SiO_2$-Anreicherung sowie der Schaffung von SiOH-Valenzen an der Legierungsoberfläche gewährleistet und die Nachteile bekannter Verfahren, wie des Silicoater-Verfahrens, der Beschichtung aus der Dampfphase (CVD) und der Plattierung mit Hilfe reakiver Ionen sowie der Staubablagerung vermeidet.

Erfindungsgemäß wird diese Aufgabe dadurch gelöst, daß die entfettete Legierungsoberfläche (Nichtedelmetallegierung/NEM, Edelmetall/EM, Stahl) mit amorphem Quarzmehl der Körnung 20-500 µm, vorzugsweise mit 160-200 µm, bei einem Strahldruck von 0,3-0,6 kPa, vorzugsweise 0,5 kPa, in einem Abstand der Strahldüse von der zu behandelnden Oberfläche von 1-15 cm, vorzugsweise 1-5 cm, je nach Größe der zu behandelnden Fläche, gestrahlt wird. Die Metalloberfläche muß vorher aber entfettet werden.

Die so behandelte Metalloberfläche zeichnet sich durch eine homogene Verteilung von eingeschmolzenen $SiO_2$-Partikeln aus, wie Elektronenstrahlmikrosondenanalysen (ESMA) und sekundärionenmassenspektroskopische Untersuchungen (SIMS) zeigen. Die $SiO_2$-Anreicherung beträgt je nach Korngröße bis zu 40 Gew.-% in einer 5-10 µm dicken Oberflächenschicht. Sie kann bedenkenlos gelagert werden, da vor der Beschichtung mit einem Haftvermittler auf der Basis von Polymethylmethacrylat (PMMA), Epoxid (EP), Urethanen bzw. Gemischen davon eine chemische Ätzung mit verdünnter Flußsäure (HF) notwendig ist. Es können 1-15%ige HF-Lösungen, vorzugsweise 5-10%ige, angewandt werden. Die Zeitdauer der Ätzung liegt zwischen 1 und 15 Minuten, vorzugsweise zwischen 1 und 5 Minuten. Im Anschluß daran wird die Oberfläche abgespült. Als Haftvermittler ist ein säurezahlmodifiziertes Polymethylmethacrylat besonders geeignet. Anschließend wird die Kunststoffschicht nach bekannten Verfahren appliziert.

Die Legierungsoberfläche kann aber auch mit einer Silanlösung mit Quarzmehl der Körnung 20-500 µm, vorzugsweise 160-200 µm, gestrahlt werden. Als Silanlösung eignen sich 10-20%ige Lösungen von Amino-, Glycedyl-, Methacryl- oder Alkylsilanen, vorzugsweise eine 10%ige Cyclohexenylsilanlösung. Andererseits kann auch mit silanbeschichtetem amorphem Quarzmehl der Körnung 20-500 µm, vorzugsweise 63-160 µm bestrahlt werden. Die Beschichtung des Quarzmehles erhält man beispielsweise durch 30-minütiges Schütteln des Quarzmehles in einer alkoholischen, essigsauren 10%igen Silanlösung und anschließendem 1 bis 3-stündigen Trocknen bei 120°C. Als Silane eignen sich Amino-, Glycedyl-, Methacryl- und Alkylsilane.

Zur Vereinfachung der Anwendung von Silanzusätzen und Erhöhung deren Wirksamkeit wird eine gleichzeitige Applikation von Strahlgut und Silanlösung empfohlen. Dadurch wird der Aufwand zur Beschichtung des Strahlgutes gespart und die Wirkungssicherheit des auf der Legierungsoberfläche befindlichen Silans erhöht, da eine immer gleichbleibende Menge an Silan vorliegt. Außerdem wird dadurch die Bildung von Staub und dessen Niederschlagen auf der Oberfläche verhindert.

Auf die so vorbehandelte Legierungsoberfläche wird ein Haftvermittler auf der Basis von Polymethylmethacrylat (PMMA), Bis-Glycedylmethacrylat, Epoxid, Urethan oder Gemische davon aufgebracht. Zur besseren Ausnutzung der retentiven Fläche ist die Applikation des Haftvermittlers im Unterdruck von $10^{-3}$ bis 100 Pa, vorzugsweise 1-80 Pa vorzunehmen. Die Zeit der Evakuierung sollte nach dem Erreichen des Druckwertes mindestens 5 Minuten dauern, zumindest so lange, bis der gewünschte Druck erreicht ist. Darauf können in bekannter Weise Deckkunststoffe appliziert werden.

Nach dem erfindungsgemäßen Verfahren können alle Metalle und Legierungen, die für derartige Verbundsysteme eingesetzt werden, behandelt werden. Das gilt für Edelmetallegierungen und Nichtedelmetallegierungen auf der Basis von Nickel, Chrom, Kobalt und Titan sowie für Edelstähle.

Die Druck-Scherprüfung eines stomatologisch relevanten Verbundsystems, bei dem die Legierungsoberfläche nach dem erfindungsgemäßen Verfahren behandelt wurde, zeigt gegenüber unbehandelten Proben eine deutliche Verbundfestigkeitssteigerung. Verbessert sind außerdem die Lagerstabilität nach Lagerung im feuchten Milieu (Aqua dest. 37°C) über 1-7 Tage und die Temperaturwechselbelastbarkeit. Es zeigt sich, daß auf diese Weise ohne großen technischen Aufwand ein stabiler Verbund geschaffen werden kann. Die so erzeugten Schichten weisen eine höhere Elastizität auf und können daher thermisch bedingten Dimensionsänderungen besser folgen, ohne daß es zu einer Ablösung oder Spaltbildung kommt. Das Verfahren ist ohne zusätzlichen gerätetechnischen Aufwand in jedem zahntechnischen Labor realisierbar. Zudem bietet es den Vorteil, im Ablauf unterbrochen werden zu können und trotzdem eine behandelte Oberfläche vorliegen zu haben, die ohne Mühe aktiviert werden kann.

Ausführungsbeispiele

Die Erfindung soll an nachstehenden Ausführungsbeispielen näher erläutert werden:

Beispiel 1

10 Proben einer Ni-Cr-Al-Legierung werden mit Aceton gereinigt und entweder mit einer 10%igen Cyclohexenylsilanlösung bestrichen oder in diese getaucht und anschließend mit Quarzmehl der Körnung 166-200 µm gestrahlt. Auf die so vorbehandelten Oberflächen wird ein säurezahlmodifiziertes Polymethylmethacrylat als Haftvermittler und als Deckkunststoff ein vernetztes Polymethylmethacrylat aufgebracht. Die erhaltenen Druck-Scherfestigkeitswerte sind in Tabelle 1 dargestellt. Es ist auch möglich, Silan mit dem Strahlgut gleichzeitig auf die Legierungsoberfläche zu sprühen.

Beispiel 2

10 Proben einer Ni-Cr-Al-Legierung werden mit Aceton gereinigt und mit silanisiertem Quarzmehl der Körnung 63-160 µm gestrahlt. Die Silanbeschichtung erhält man dadurch, daß das Quarzmehl in einer alkoholischen, essigsauren 10%igen Silanlösung über 30 Minuten geschüttelt und anschließend 90 Minuten bei 120°C getrocknet wird. Die mit dem silanisierten Quarzmehl gestrahlten Proben werden wie in Beispiel 1 weiterbehandelt. Die erhaltenen Druck-Scherfestigkeitswerte sind in Tabelle 1 dargestellt.

Tabelle 1

### Druck-Scherfestigkeitswerte in MPa

| Beispiel 1 | Legierungsober- fläche, mit Si- lan beschichtet | 160-200 $\mu$m Quarz, 0,5 Pa Strahldruck | 22,3 MPa |
|---|---|---|---|
| Beispiel 2 | silanisiertes Quarz | 63-160 $\mu$m 0,5 Pa Strahl- druck | 23,2 MPa |

Beispiel 3

Jeweils 10 Proben der Nickel-Basis-Legierung NCA werden mit Aceton entfettet und anschließend mit amorphem Quarzmehl gestrahlt. Dabei werden drei verschiedene Kornfraktionen eingesetzt: 63-160 µm, 200-300 µm und 315-400 µm. Zum Vergleich werden auch noch zwei Kornfraktionen Korund eingesetzt: 200-315 µm und 315-400 µm. Der Strahldruck beträgt 0,5 Pa und die Strahldüse wird in einem Abstand von 5 cm über der zu strahlenden Legierung geführt. Anschließend werden die gestrahlten Legierungsoberflächen mit 10%iger Flußsäure (HF) 5 Minuten geätzt und danach mit Aqua dest. gespült. Jetzt werden nach bekannten Verfahren ein Haftvermittler auf der Basis eines säurezahlmodifizierten Polymethylmethacrylats aufgebracht und der Deckkunststoff, ein vernetztes Polymethylmethacrylat, appliziert. Die erhaltenen Druck-Scherfestigkeitswerte sind in Tabelle 1 ausgewiesen.

Tabelle 1

| Strahlma- terial | Strahlgutdurch- messer ($\mu$m) | Druck-Scherfestigkeit ohne HF-, | nach HF-Ätzung |
|---|---|---|---|
| SiO$_2$ | 60-160 | 6,7 MPa | 17,4 MPa |
| SiO$_2$ | 200-315 | 10,3 MPa | 21,5 MPa |
| SiO$_2$ | 315-400 | 8,2 MPa | 22,9 MPa |
| Korund (Al$_2$O$_3$) | 200-315 315-400 | 8,7 MPa 11,3 MPa | 9,6 MPa 14,7 MPa |

Beispiel 4

10 Proben werden, wie in den vorstehenden Beispielen beschrieben, mit amorphem Quarzmehl gestrahlt. Anschließend werden diese Proben in eine mit Unterdruck beauflagbare Kammer (Druck 80 Pa) eingebracht und im Unterdruck mit Haftvermittler beschichtet. Nach Druckausgleich wird die Probe entnommen und, wie in den anderen Beispielen beschrieben, mit Deckkunststoff beschichtet. Die Prüfung der Druck-Scherfestigkeit ergab folgende Werte:

| | bei Normaldruck behandelt | Unterdruckbehandlung (ohne Silanisierung) |
|---|---|---|
| Festigkeit | 12 MPa | 21 MPa |

**Patentansprüche**

1. Verfahren zur Verbesserung der Haftung von Kunststoffen auf Metallen, dadurch gekennzeichnet, daß die nach bekannten Verfahren entfettete Metalloberfläche mit amorphem Quarzmehl der Körnung 20-500 μm, vorzugsweise 160-200 μm bei einem Strahldruck von 0,3-0,6 kPa, vorzugsweise 0,5 kPa und einem Düsenabstand von 1-15 cm, vorzugsweise 1-5 cm gestrahlt wird.

2. Verfahren nach Anspruch 1, dadurch gekennzeichnet, daß vor dem Aufbringen eines Haftvermittlers und eines Deckkunststoffes eine Reaktivierung der Legierungsoberfläche mit verdünnter Flußsäure erfolgt, die nach einer Einwirkzeit von 1-15 Minuten, vorzugsweise 1-5 Minuten mit Aqua dest. abgespült wird.

3. Verfahren nach Anspruch 2, dadurch gekennzeichnet, daß eine 1-15%ige, vorzugsweise 1-5%ige Flußsäure zur Anwendung kommt.

4. Verfahren nach Anspruch 1, dadurch gekennzeichnet, daß die vorbehandelte Metalloberfläche
   - entweder mit einer Silanlösung befeuchtet und anschließend mit amorphem Quarzmehl der Körnung 20-500 μm, vorzugsweise 160-200 μm,
   - oder mit silanisiertem amorphem Quarzmehl der Körnung 20-500 μm, vorzugsweise 63-160 μm
   gestrahlt wird und daß auf die so vorbereitete Metalloberfläche ein bekannter Haftvermittler aufgebracht und darauf der Deckkunststoff appliziert wird.

5. Verfahren nach Anspruch 4, dadurch gekennzeichnet, daß als Silanlösung eine 10-20%ige Lösung von Amino-, Glycedyl-, Methacryl- oder Alkylsilanen, vorzugsweise eine Cyclohexenylsilanlösung zur Anwendung kommt.

6. Verfahren nach Anspruch 4, dadurch gekennzeichnet, daß mit Amino-, Glycedyl- oder Methacrylsilanen beschichtetes Quarzmehl zur Anwendung kommt, das man durch 30-minütiges Schütteln des Quarzmehls in einer alkoholischen, essigsauren 10%igen Silanlösung und anschließendem 60- bis 180-minütigem Trocknen bei ca. 120°C erhält.

7. Verfahren nach Anspruch 1, dadurch gekennzeichnet, daß das Strahlgut und die Silanlösung gleichzeitig auf die Legierungsoberfläche gestrahlt bzw. gesprüht werden.

8. Verfahren nach Ansprüchen 1 bis 7, dadurch gekennzeichnet, daß ein Haftvermittler auf der Basis von Polymethylmethacrylat (PMMA), Epoxid (EP), Urethanen bzw. Gemischen davon zur Anwendung kommt.

9. Verfahren nach Anspruch 7, dadurch gekennzeichnet, daß der Haftvermittler im Unterdruck $10^{-3}$ bis 100 Pa, vorzugsweise 1 bis 80 Pa appliziert wird.

**Claims**

1. A process for improving the adhesion of synthetic materials to metals, characterized in that the metal surface which has been degreased according to known processes is jet-blasted with amorphous quartz meal having a particle size of from 20 to 500 μm, and preferably from 160 to 200 μm, at a jet pressure of from 0.3 to 0.6 kPa, and preferably of 0.5 kPa, and at a nozzle distance of from 1 to 15 cm, and preferably from 1 to 5 cm.

2. The process according to claim 1, characterized in that prior to the application of an adhesion promoter and of a top coat of a synthetic material the alloy surface is reactivated with diluted hydrofluoric acid which is removed by rinsing with distilled water after a period of action of from 1 to 15 minutes, and preferably from 1 to 5 minutes.

3. The process according to claim 2, characterized in that a hydrofluoric acid having a content of from 1 to 15%, and preferably from 1 to 5%, is used.

4. The process according to claim 1, characterized in that the pre-treated metal surface

EP 0 481 115 B1

- is either wetted with a silane solution and then jet-blasted with amorphous quartz meal having a particle size of from 20 to 500 $\mu$m, and preferably from 160 to 200 $\mu$m,
- or is jet-blasted with a silanized amorphous quartz meal having a particle size of from 20 to 500 $\mu$m, and preferably from 63 to 160 $\mu$m,

and that a known adhesion promoter is applied onto the metal surface thus pre-treated and the top coat of a synthetic material is then applied thereonto.

5. The process according to claim 4, characterized in that a solution containing from 10% to 20% of amino-, glycidyl-, methacryl- or alkylsilanes, and preferably a cyclohexenylsilane solution is used as the silane solution.

6. The process according to claim 4, characterized in that a quartz meal coated with amino-, glycidyl- or methacrylsilanes is used which has been obtained by shaking the quartz meal in an alcoholic, acetic acid solution of 10% of the silane for 30 minutes, followed by drying at about 120 °C for from 60 to 180 minutes.

7. The process according to claim 1, characterized in that the blast material and the silane surface are simultaneously jet-blasted and sprayed, respectively, onto the surface of the alloy.

8. The process according to claims 1 through 7, characterized in that an adehsion promoter based on poly(methyl methacrylate) (PMMA), epoxide (EP), urethanes amd/or mixtures thereof is used.

9. The process according to claim 7, characterized in that the adhesion promoter is applied at subatmospheric pressure of from $10^{-3}$ to 100 Pa, and preferably from 1 to 80 Pa.


## Revendications

1. Procédé d'amélioration de l'adhérence de matières synthétiques sur des métaux, caractérisé en ce que la surface métallique dégraissée suivant les procédés connus est sablée avec de la poudre de quartz amorphe à granulation de 20 à 500 $\mu$m - de préférence de 160 à 200 $\mu$m - à une pression de sablage de 0,3 à 0,6 kPa - de préférence de 0,5 kPa - et à une distance de la buse de 1 à 15 cm - de préférence de 1 à 5 cm.

2. Procédé selon la revendication 1, caractérisé en ce que avant de recouvrir la surface d'un agent adhésif et d'une couche de matière synthétique, la surface de l'alliage est réactivée avec de l'acide fluorhydrique dilué pendant 1 à 15 minutes - de préférence pendant 1 à 5 minutes, puis rincée avec de l'eau distillée.

3. Procédé selon la revendication 2, caractérisé en ce qu'une solution de 1 à 15% d'acide fluorhydrique - de préférence de 1 à 5% - est utilisée.

4. Procédé selon la revendication 1, caractérisé en ce que la surface métallique préalablement traitée
   - soit : est humectée avec une solution d'hydrure de silicium (silane) et sablée, immédiatement après, avec de la poudre de quartz amorphe à granulations de 20 à 500 $\mu$m, de préférence de 160 à 200 $\mu$m,
   - soit : sablée avec de la poudre de quartz amorphe silanisé à granulation de 20 à 500 $\mu$m, de préférence de 63 à 160 $\mu$m

   et que la surface ainsi préalablement traitée est couverte d'un agent adhésif connu puis de matière synthétique.

5. Procédé selon la revendication 4, caractérisé en ce qu'on utilise comme solution de silane, une solution de 10 à 20% de silane aminé, glycédylique, méthacrylique ou d'alkyle - de préférence une solution de silane de cyclohexyle.

6. Procédé selon la revendication 4, caractérisé en ce qu'on utilise une poudre de quartz recouvertes de silane aminé, glycédylique ou méthacrylique, que l'on prépare en agitant la poudre de quartz pendant 30 minutes dans une solution de silane alcoolique et d'acide acétique à 10%, puis en la sèchant immédiatement après pendant 60 à 180 minutes à une température de 120°C.

7. Procédé selon la revendication 1, caractérisé en ce que la poudre de quartz et la solution de silane sont projetées ou épandues en même temps sur la surface de l'alliage.

8. Procédé selon les revendications 1 à 7, caractérisé en ce qu'un agent adhésif à base de méthacrylate de polyméthyle (PMMA), d'époxy (EP) d'uréthanes ou des mélanges de ces éléments, est utilisé.

9. Procédé selon la revendication 7, caractérisé en ce que l'agent adhésif est appliqué sous une dépression de $10^{-3}$ à 100 Pa - mais de préférence de 1 à 80 Pa.